# EUROPEAN PATENT SPECIFICATION

(11) **EP 2 528 049 B1**
(45) Date of publication and mention of the grant of the patent: **01.01.2014**
(21) Application number: 11167094.9
(22) Date of filing: 23.05.2011
(51) Int. Cl.: G08G 1/0962, G08G 1/16, G01C 21/36, G06K 9/00, G06T 7/00, B60W 30/08

(54) **Method and a device for detecting safety critical objects to a vehicle using Navigation data**
Verfahren und Vorrichtung zur Erfassung von sicherheitskritischeren Objekten für ein Fahrzeug mit Hilfe von Navigationsdaten
Méthode et dispositif pour détecter des objets de sécurité critiques pour un véhicule au moyen de données de navigation

(43) Date of publication of application: 28.11.2012
(73) Proprietor: Robert Bosch GmbH, 70442 Stuttgart (DE)
(72) Inventor: Longchamp, Jean-Francois, 1012, Lausanne (CH); Lopez, Eladio, 70839, Gerlingen (DE)

(56) References cited:
- WO-A1-2007/102065
- US-A1- 2007 206 849
- US-A1- 2009 303 078
- US-B1- 6 191 704
- US-B1- 6 266 442

## Description

### Field of the invention

The present invention relates to a method and a device for detecting safety critical objects to a vehicle using a navigation device. Safety critical objects are potential obstacles to the vehicle or the traffic environment signs which are critical for driving of the vehicle. The vehicle is equipped with the device and the method of the current invention and is further equipped with a navigation device and an image capturing device. The method of the present invention makes use of navigational data available from the navigation device and an image of the periphery of the vehicle, which is captured from the image capturing device for detecting the safety critical objects to the vehicle. The method of the present invention further estimates visual attention of a driver of the vehicle towards said detected safety critical objects and generates an appropriate warning to the driver depending on the estimated visual attention of the driver.

### State of the art

A method and a device for detecting safety critical objects to a vehicle using a navigation device is known from WO 2007/102065.

US patent application No. 2009/0303078 A1, further teaches one such technology wherein a travel information device equipped in a vehicle and consisting of an object extracting section, extracts safety confirmation objects from a surrounding information and representing surrounding condition of the vehicle and acquired from a surrounding information collecting section. US patent application No. 2009/0303078 A1, further uses a line-of-sight direction of a driver of the vehicle detected by a line of sight detecting section and calculates the visibility in consideration of the driver's surrounding viewing of the extracted safety confirmation objects. An information presenting section presents safety confirmation to the driver depending on the visibility. All detected safety confirmation objects are processed for safety criticality and this may lead the driver with too many safety confirmation information which may be not necessary.

US 6,191,704 B1 further discloses a method and device for detecting safety critical objects.

### Description of the invention

The current invention shows a method of an object detection device equipped in a vehicle, for detecting safety critical objects to said vehicle, the vehicle further equipped with a navigation device and an image capturing device for capturing at least one image in the immediate vicinity of said vehicle according to claim 1. Said method comprises the steps, receiving at least one infrastructure information of a road in the direction of travel of said vehicle from said navigation device, combining said at least one infrastructure information of said road and at least one image captured from said image capturing device, deriving at least one region in said combination in which safety critical objects are expected, detecting objects in said at least one region and analysing said detected objects for safety criticality to said vehicle.

According to the present invention, the at least one region is the most important region for analysis of safety critical objects, because it depends on the at least one infrastructure information of the road. The deriving and analysis of such a region helps in reducing a number of unwanted object recognition processes and corresponding unnecessary safety confirmation information to a driver of the vehicle. The derivation of the at least one region in the combination of at least one infrastructure information of the road and at least one image of the periphery of the vehicle, advantageously helps in focusing the analysis of the safety critical objects to one region which is the most important.

According to another feature of the current invention, at least one infrastructure information of the road represents at least one or a mixture of a geographical location of said road in a map, traffic sign or road marking at said road, width of said road or curvature of said road. The mentioned infrastructure information of the road are advantageously used by the method of the current invention in deriving the at least one region in which the analysis should be done.

The method of the current invention combines said at least one infrastructure information of said road and said at least one image of the periphery of the vehicle, captured from said image capturing device resulting in an image data representing both said infrastructure information of said road and said image captured from said vehicle. The image data is equivalent to a superimposition of the road infrastructure information on the image of the periphery of the vehicle, captured from the image capturing device. Such a image data is processed for deriving the at least one region for analysis of safety critical objects. The image data, depending on the road infrastructure information advantageously helps in identifying the at least one region, in which the safety critical objects are to be expected.

According to the method of the current invention, the at least one region is represented especially by at least one quadrant of the image data. According to the current invention the image data is split into quadrants. Depending on the road infrastructure information at least one quadrant is derived for safety critical object analysis. The road infrastructure information influences the derivation of the at least one quadrant in that the location of the expected safety critical objects are defined by road infrastructure information. According to the invention, the location of the road on which the vehicle is being driven influences the derivation of the at least one quadrant. If the vehicle is being driven on a express way, the method of the current invention derives the upper two quadrants of the image data for analysis because a driver of the vehicle tends to look at the vanishing point, while driving on a expressway and the traffic signs and markings are also expected in the upper two quadrants. Similarly, while the vehicle is being driven in a city, the lower two quadrants are chosen for analysis, because the driver tends to look in the immediate proximity in front of the vehicle.

In another feature of the invention, the left two quadrants or the right two quadrants of said image data is derived when said road has a left curvature or a right curvature respectively. When the road, on which the vehicle of the current invention is driven, is having a left turn or a left curve, then the expected safety critical objects like traffic markings tend to be more towards the left side of the vehicle and driver of the vehicle tends to look towards the left side of the vehicle. In this regard, derivation and analysis of the left two quadrants of the image data is advantageous in that the most critical region and objects are analysed. A similar explanation holds good when the road has a right turn and the safety critical objects are expected on the right two quadrants of the image data.

After deriving the quadrants said at least one quadrant is used for the detection of said safety critical objects. The safety critical objects represent at least one predefined object stored as said infrastructure information of said road and/or represent at least one safety critical object to said vehicle and captured by said image capturing device. By focusing on the detection of safety critical objects in the derived quadrant, the method of the current invention advantageously optimises the object recognition process needed for this purpose. The safety critical object recognition process can be advantageously done using saliency calculation processes.

According to the current invention a visual focus determination means is used for determining the location of visual focus of a driver of said vehicle. The visual focus determination means can be an internal camera capturing the movement of the eye-fovea of the driver of the vehicle. The visual focus determination means further calculates the direction in which the driver is currently looking. Using the visual focus determined by the visual focus determination means and the safety critical objects that are detected in the derived at least one quadrant of the image data, a comparison is done between the two and a visual attention of the driver of the vehicle on the detected safety critical objects is calculated. The method of the current invention checks if the driver of the vehicle is giving appropriate visual attention to the detected safety critical objects and which is necessary for safe driving of the vehicle.

According to the invention, the method of the current invention outputs a driver warning depending on the detected visual attention of the driver. The warning is optimised advantageously in that only necessary safety critical objects are warned against, in the form of a audio or a visual warning or a vibration of a steering wheel, automatic control of the driving condition of the vehicle like activating brakes using an ABS system, activating electronic stability control systems (ESC), or could be a milder or a stronger indication, but is not limited to the mentioned few.

The method of the current invention can also be advantageously realised on a smart-phone connected to a vehicle while driving. The smart phone is usually equipped with two cameras, one in the front and other on the backside and has navigation system adopted. The smart-phone can be advantageously located in the vehicle, such that the front camera is looking at the driver direction and the backside camera is looking in the direction of the road. These available features of a smart-phone can be advantageously used by the method of the current invention and the necessary object detection and driver visual attention can be calculated and necessary warnings can be generated.

The current invention further shows an object detection device in a vehicle comprising a navigation means and a image capturing means according to claim 6.

Further characteristics, applications and advantages of the invention arise from the following description of embodiments of the invention which are represented in the figures of the drawing.

### Short description of the drawings

In the following, examples of the invention are explained on the basis of drawings. The drawings are,
- Fig.1: shows a driver assistance device related to current invention
- Fig.2: shows a method of the current invention.

### Description of the Embodiments

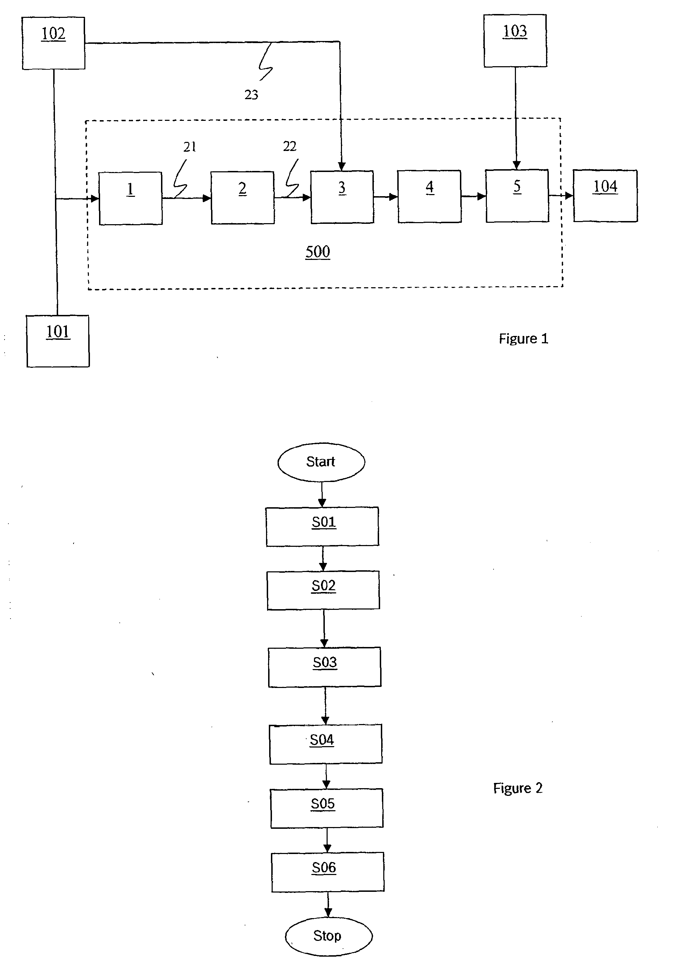

Figure 1 show the driver assistance device equipped in a vehicle and detecting safety critical objects to the vehicle using the method of the current invention. The driver assistance device 500 consists of an image merging means 1, connected with an image capturing means 101 and a navigation means 102, which are located outside the driver assistance device 500. The image merging means 1 generates an image data 21 and is fed to a region of interest computation means 2. The region of interest computation means 2 computes at least one region of interest 22 in the image data 21 and is further connected to object detection means 3. The object detection means 3 is also connected with the Navigation means 102 and the navigation means provides traffic sign information 23 to the object detection means 3. A safety criticality determination means 4 is connected with the object detection means. A driver attention estimation means 5, also located inside the driver assistance device 500, is connected to the safety criticality determination means 4 and a driver visual focus determination means 103. A driver warning means 104 is further connected to the driver attention estimation means 5.

The image capturing means 101 captures at least one image in the immediate vicinity of the vehicle. These images are captured in real time and specifically in the driving direction of the vehicle and used for detecting potential obstacles that the vehicle would encounter. The image capturing means 101 typically captures images of safety critical objects, which are essential for safe driving of the vehicle for example, other vehicles, traffic signs, pedestrians etc. The navigation means 102 typically provides the navigational data necessary for driving of the vehicle. It provides data like the topography in which the vehicle is being driven, the location in which the vehicle is being driven for example, whether the vehicle is being driven in a highway or in a city street, it also gives information regarding the width of the road or the curvature of the road on which the vehicle is being driven. Further the navigation means 102 also provides the traffic signs which would be encountered by a driver of the vehicle while driving and the vanishing point information about the road trajectory. These traffic signs are typically a stop sign, a pedestrian crossing sign or a speed change sign, which are to be perceived by the driver of the vehicle for safe driving. The aforementioned data are all prestored in a memory of the navigation means 102. The at least one image captured by the image capturing means 101 and the navigation information obtained from the navigation means 102 and representing at least one infrastructure information of the road in the driving direction of the vehicle are fed to the image merging means 1. The image merging means 1 merges the mentioned at least one image with at least one road infrastructure information and generates the image data 21. The image data 21 is a superimposition of the road infrastructure information on the at least one image captured. The image data 21 clearly shows a region in the at least one image, in which expected traffic signs are located. The image data also shows topography of the road in correlation with the captured image. For example, from the image data 21, a region can be derived depending on the curvature of the road or the location in which the road is located. If the road is having a right turn, then it is expected that all the safety critical objects are located towards the right hand side of the image data 21. Similarly, if the road is a highway, then it is expected that all the safety critical objects are located in the upper region of the image data 21.

The region of interest computation means 2 depending on the mentioned criteria generates a region in the image data 21. The region of interest computation means 2 according to the characteristics of the current invention, typically splits the image data 21 into quadrants and derives at least one quadrant in the image data 21 for further processing. The centre of the image data 21 represents the vanishing point. The left two quadrants are derived when the road as represented by the road infrastructure information shows a left turn or left curve of the road. Likewise right two quadrants are derived for a right turn or right curvature. Upper two quadrants are derived for a highway or an express way and the lower two quadrants are derived for analysis when the vehicle is being driven in a city. For a vehicle being driven in a city, because of the slow moving of the traffic and also the perception of the driver to see at the traffic signs much later, the lower two quadrants become very important for analysis in this case. Further, depending on the exact location in which expected traffic signs are located and obtained from the image data 21 at least one specific quadrant is derived for analysis. The at least one region of interest 22, represents a quadrant in the image data 21 which needs to be analysed specifically for the safety critical objects. The splitting of the image data 21 into quadrants forms one of the characteristics of the current invention and further the image data 21 can also be split into several parts for specific derivation of the region, which are not mentioned here.

The object detection means 3, detects objects in the at least one region of interest 22. These objects that are detected can be other vehicles or pedestrians or traffic signs. The object detection means 3 is also connected with navigation means 102. The object detection means receives as input the predefined traffic sign information 23 from the navigation means 102 and searches for specific traffic signs, in the at least one region of interest 22. The object detection means 3 selects and prioritizes the objects according to the driving environment in a determined moment. For example, in a motorway only specific road signs will be selected and prioritized according to the driving task and those road signs are searched in the at least one region of interest 22. The object detection means also searches for other traffic signs which are not obtained from the navigation means 102. Saliency calculation methods, especially map saliencies are used for searching into a scene or a region only for a predetermined kind of object.

After the objects are detected by the object detection means 3 in at least one region of interest 22, the safety criticality determination means 4, which is connected downstream from the object detection means 3, determines the safety criticality of the detected objects. Safety criticality of an object represents the degree to which the detected object can be hazardous to the safe driving of the vehicle. The objects are rated based on the potential obstacle that they can be to the vehicle. Other objects for example, traffic signs are also rated in that the traffic signs have to be seen by the driver of the vehicle for safe driving. The driver has to pay attention to such traffic signs. This is achieved by the driver attention estimation means 5, which works in correlation with the safety criticality determination means 4. The driver visual focus determination means 103 is a camera placed inside the vehicle and it captures the fovea movement of the driver's eyes. The driver visual focus determination means 103 acts as a gaze tracking system which computes statistically the driving area covered by the gaze direction. The driver visual focus determination means 103 is connected to the driver attention estimation means 5 and gives as input the driver's gaze direction. The driver attention estimation means 5 working in correlation with the safety criticality determination means 4, estimates if the driver has seen or perceived all detected safety critical objects and also is dependent on the safety criticality of the detected objects. The driver attention estimation means 5 determines the driver's attentiveness factor. Thus, areas having high foveal activity, corresponding with relevant objects and in one scene area or at least one region and representing a high driving interest, will be considered as high attentiveness. A driver warning means 104 connected downstream from the driver attention estimation means 5, warns the driver of the vehicle according to the driver attention estimation determined by the driver attention estimation means 5. The warnings can be to varying degrees depending on the driver's attention. A visual warning or a audio warning combined with forcible intervention in the driving condition can also be realised as the result of the driver's attention.

The method according to present invention for calculating safety critical objects to the vehicle can also be implemented as a computer program on a control device of a driver assistance device of a vehicle, in particular a motor vehicle, although other solutions are of course possible. For this purpose the computer program is stored in a memory element of the control device. The method is carried out by execution on a microprocessor of the control device, receiving inputs from navigation means 102, image capture means 101 and driver visual focus determination means 103. The computer program can be stored as a computer program product on a computer readable data medium (diskette, CD, DVD, hard drive, USB memory stick, memory card or the like wise) or on an internet server, and can be transferred from there into the memory element of the control device. The can be executed in a single functional block or in several functional blocks.

Figure 2 shows the processes of the current invention executed in the driver assistance means 500 of the current invention. The method starts when the ignition of the vehicle is turned ON. In step S01, at least one infrastructure information of a road in the direction of travel of the vehicle from the navigation means 102 and at least one image captured from the image capturing means 101 is received. In step S02 both the data are combined to derive the image data 21. In step S03, at least one region 22 in said combination in which safety critical objects are expected is derived. In step S04, objects in said at least one region 22 are detected and are analysed for safety criticality to said vehicle. In step S05, the visual attention of the driver of the vehicle on detected safety critical objects is determined. In step S06, a warning is generated dependent on the determined visual attention of the driver.

## Claims

1. A method for detecting safety critical objects to a vehicle, the method being for use in a driver assistance device (500) equipped in said vehicle, the method comprising the steps:
- capturing at least one image of the immediate vicinity of said vehicle using an image capturing means (101) of the vehicle;
- receiving (S01) at least one infrastructure information of a road in the direction of travel of said vehicle from a navigation means (102) of the vehicle;
- combining (S02) said at least one infrastructure information of said road and said at least one image captured from said image capturing means (101), said combination resulting in an image data (21) representing both said infrastructure information of said road and said image captured;
- deriving (S03) at least one region (22) in said combination in which safety critical objects are expected;
- detecting (S04) objects in said at least one region (22); and
- analysing said detected objects for safety criticality to said vehicle;
**characterized in that** the at least one region (22) represents at least one quadrant derived from said image data (21), wherein the upper quadrants of said image data (21) are derived when said vehicle travels on an express way and the lower quadrants of said image data (21) are derived when said vehicle travels in an urban environment; the method further comprising the steps:
- determining the location in the image data (21) of visual focus of a driver of said vehicle musing a visual focus determination means (103);
- comparing said detected safety critical objects in the image data (21) and said location of visual focus in the image data (21) of said driver for detecting visual attention of said driver; and
- outputting a driver warning depending on the detected visual attention of said driver.

2. The method as claimed in claim 1, **characterized in that** at least one infrastructure information of said road represents at least one of
- a geographical location of said road in a map,
- traffic sign or road marking at said road,
- with of said road, and/or
- curvature of said road.

3. The method as claimed in at least one of the preceding claims, **characterized in that** at least one quadrant is used for the detection of said safety critical objects.

4. The method as claimed in claim 3, **characterized in that** safety critical objects representing at least one predefined object (23) stored as said infrastructure information of said road and/or representing at least one safety critical object to said vehicle and captured in said at least one image by said image capturing device (101).

5. The method as defined in claim 4, **characterized by** using saliency calculation processes for detecting said objects.

6. A driver assistance device (500) in a vehicle, comprising an image merging means (1), which generates an image data (21) representing at least one image captured by an image capturing means (101) and at least one infrastructure information of a road in the direction of travel of said vehicle from a navigation means (102), and further comprising:
- a region of interest computation means (2), which computes at least one region (22) in said image data (21), wherein the at least one region (22) represents at least one quadrant derived from said image data (21), and wherein the upper quadrants of said image data are derived when said vehicle travels on an express way and the lower quadrants of said image data (21) are derived when said vehicle travel in an urban environment;
- an object detection means (3), which detects objects in said at least one region (22);
- a safety criticality determination means (4), which determines safety critical objects to the vehicle from said detected objects;
- a visual determination means (103) for determining the location in the image data (21) of visual focus of a driver of the vehicle;
- a driver attention estimation means (5), which estimates the attention of a driver of the vehicle depending on said determined safety critical objects; and
- a driver waning means (104), which warns the driver of the vehicle depending on said estimated attention of the driver.

## Patentansprüche

1. Verfahren zum Detektieren sicherheitskritischer Objekte für ein Fahrzeug, wobei das Verfahren vorgesehen ist für eine Verwendung in einer Fahrerassistenzvorrichtung (500), mit der das Fahrzeug ausgestattet ist, wobei das Verfahren die folgenden Schritte umfasst:
- Erfassen mindestens einer Abbildung der unmittelbaren Umgebung des Fahrzeugs unter Verwendung von Bilderfassungsmitteln (101) des Fahrzeugs;
- Empfangen (S01) mindestens einer Infrastrukturinformation von einer Straße in Fahrtrichtung des Fahrzeugs von einem Navigationsmittel (102) des Fahrzeugs;
- Kombinieren (S02) der mindestens einen Infrastrukturinformation von der Straße und der mindestens einen von den Bilderfassungsmitteln (101) erfassten Abbildung, wobei die Kombination zu Abbildungsdaten (21) führt, die sowohl die Infrastrukturinformationen von der Straße als auch die erfasste Abbildung darstellen;
- Ableiten (S03) mindestens eines Bereichs (22) in der Kombination, in dem sicherheitskritische Objekte erwartet werden;
- Detektieren (S04) von Objekten in dem mindestens einen Bereich (22); und
- Analysieren der detektierten Objekte, inwieweit sie für das Fahrzeug sicherheitskritisch sind;
**dadurch gekennzeichnet, dass** der mindestens eine Bereich (22) mindestens einen Quadranten, der aus den Abbildungsdaten (21) abgeleitet ist, darstellt, wobei die oberen Quadranten der Abbildungsdaten (21) abgeleitet werden, wenn das Fahrzeug auf einer Schnellstraße fährt, und die unteren Quadranten der Abbildungsdaten (21) abgeleitet werden, wenn das Fahrzeug in einer städtischen Umgebung fährt; wobei das Verfahren ferner die folgenden Schritte umfasst:
- Bestimmen des Orts des Blickpunktes eines Fahrers des Fahrzeugs in den Abbildungsdaten (21) unter Verwendung von Mitteln (103) zur Bestimmung eines Blickpunktes;
- Vergleichen der detektierten sicherheitskritischen Objekte in den Abbildungsdaten (21) und des Orts des Blickpunktes in den Abbildungsdaten (21) des Fahrers, um die sichtbare Aufmerksamkeit des Fahrers zu detektieren; und
- Ausgeben einer Fahrerwarnung in Abhängigkeit von der detektierten sichtbaren Aufmerksamkeit des Fahrers.

2. Verfahren nach Anspruch 1, **dadurch gekennzeichnet, dass** mindestens eine Infrastrukturinformation von der Straße Folgendes darstellt:
- einen geographischen Ort der Straße in einer Karte,
- und/oder ein Verkehrszeichen oder eine Straßenmarkierung der Straße,
- und/oder eine Breite der Straße, und/oder
- eine Krümmung der Straße.

3. Verfahren nach einem der vorhergehenden Ansprüche, **dadurch gekennzeichnet, dass** mindestens ein Quadrant für die Detektion sicherheitskritischer Objekte verwendet wird.

4. Verfahren nach Anspruch 3, **dadurch gekennzeichnet, dass** sicherheitskritische Objekte mindestens ein vordefiniertes Objekt (23) darstellen, das als Infrastrukturinformation der Straße gespeichert ist, und/oder mindestens ein sicherheitskritisches Objekt für das Fahrzeug darstellen, das in der mindestens einen Abbildung durch die Bilderfassungsvorrichtung (101) erfasst wird.

5. Verfahren nach Anspruch 4, **gekennzeichnet durch** ein Verwenden von Ausprägungsberechnungsverfahren zum Detektieren der Objekte.

6. Fahrerassistenzvorrichtung (500) in einem Fahrzeug, die Mittel (1) zum Zusammenfügen von Abbildungen, die Abbildungsdaten (21) erzeugen, die mindestens eine Abbildung, die von den Bilderfassungsmitteln (101) erfasst worden ist, und mindestens eine Infrastrukturinformation von einer Straße in Fahrtrichtung des Fahrzeugs von einem Navigationsmittel (102) darstellen, umfasst und ferner Folgendes umfasst:
- Mittel (2) zum Berechnen eines Bereichs von Interesse, die mindestens einen Bereich (22) in den Abbildungsdaten (21) berechnen, wobei der mindestens eine Bereich (22) mindestens einen Quadranten, der aus den Abbildungsdaten (21) abgeleitet ist, darstellt, und wobei die oberen Quadranten der Abbildungsdaten abgeleitet werden, wenn das Fahrzeug auf einer Schnellstraße fährt, und die unteren Quadranten der Abbildungsdaten (21) abgeleitet werden, wenn das Fahrzeug in einer städtischen Umgebung fährt;
- Zieldetektionsmittel (3), die Ziele in dem mindestens einen Bereich (22) detektieren;
- Mittel (4) zur sicherheitskritischen Bestimmung, die sicherheitskritische Objekte für das Fahrzeug aus den detektierten Objekten bestimmen;
- Mittel (103) zur visuellen Bestimmung, um den Ort in den Abbildungsdaten (21) des Blickpunkts eines Fahrers des Fahrzeugs zu bestimmen;
- Mittel (5) zum Abschätzen der Fahreraufmerksamkeit, die in Abhängigkeit von den bestimmten sicherheitskritischen Objekten die Aufmerksamkeit eines Fahrers des Fahrzeugs schätzen; und
- Mittel (104) zum Warnen eines Fahrers, die in Abhängigkeit von der geschätzten Aufmerksamkeit des Fahrers den Fahrer des Fahrzeugs warnen.

## Revendications

1. Procédé pour détecter des objets critiques pour la sécurité d'un véhicule, le procédé étant destiné à être utilisé dans un dispositif d'aide au conducteur (500) embarqué dans ledit véhicule, le procédé comprenant les étapes consistant à :
- capturer au moins une image du voisinage immédiat dudit véhicule à l'aide d'un moyen de capture d'image (101) du véhicule ;
- recevoir (S01) au moins une information d'infrastructure d'une route dans le sens de la marche dudit véhicule en provenance d'un moyen de navigation (102) du véhicule ;
- combiner (S02) ladite au moins une information d'infrastructure de ladite route et ladite au moins une image capturée en provenance dudit moyen de capture d'image (101), ladite combinaison produisant des données d'image (21) représentant à la fois ladite information d'infrastructure de ladite route et ladite image capturée ;
- déduire (S03) au moins une région (22) dans ladite combinaison dans laquelle des objets critiques pour la sécurité sont anticipés ;
- détecter (S04) des objets dans ladite au moins une région (22) ; et
- analyser lesdits objets détectés pour déterminer leur criticité pour la sécurité dudit véhicule ;
**caractérisé en ce que** ladite au moins une région (22) représente au moins un quadrant déduit desdites données d'image (21), les quadrants supérieurs desdites données d'image (21) étant déduits lorsque ledit véhicule roule sur une voie rapide et les quadrants inférieurs desdites données d'image (21) étant déduits lorsque ledit véhicule roule dans un milieu urbain ; le procédé comprenant en outre les étapes consistant à :
- déterminer l'emplacement dans les données d'image (21) du foyer visuel d'un conducteur dudit véhicule à l'aide d'un moyen de détermination de foyer visuel (103) ;
- comparer lesdits objets détectés critiques pour la sécurité dans les données d'image (21) et ledit emplacement du foyer visuel dans les données d'image (21) dudit conducteur en vue de détecter l'attention visuelle dudit conducteur ; et
- émettre une alerte à l'intention du conducteur en fonction de l'attention visuelle détectée dudit conducteur.

2. Procédé selon la revendication 1, **caractérisé en ce qu'**au moins une information d'infrastructure de ladite route représente au moins un des éléments suivants
- un emplacement géographique de ladite route sur une carte,
- un panneau de signalisation ou un marquage au sol au niveau de ladite route,
- la largeur de ladite route, et/ou
- la courbe de ladite route.

3. Procédé selon au moins une des revendications précédentes, **caractérisé en ce qu'**au moins un quadrant est utilisé pour la détection desdits objets critiques pour la sécurité.

4. Procédé selon la revendication 3, **caractérisé en ce que** les objets critiques pour la sécurité représentent au moins un objet prédéfini (23) stocké à titre de ladite information d'infrastructure de ladite route et/ou représentent au moins un objet critique pour la sécurité dudit véhicule capturé dans ladite au moins une image par ledit dispositif de capture d'image (101).

5. Procédé selon la revendication 4, **caractérisé par** l'étape consistant à utiliser des méthodes de calcul de saillance pour la détection desdits objets.

6. Dispositif d'aide au conducteur (500) embarqué dans un véhicule, le dispositif comprenant un moyen de fusion d'image (1), qui génère des données d'image (21) représentant au moins une image capturée par un moyen de capture d'image (101) et au moins une information d'infrastructure d'une route dans le sens de la marche dudit véhicule en provenance d'un moyen de navigation (102), et comprenant en outre :
- un moyen de calcul de région d'intérêt (2), qui calcule au moins une région (22) dans lesdites données d'image (21), ladite au moins une région (22) représentant au moins un quadrant déduit desdites données d'image (21), les quadrants supérieurs desdites données d'image étant déduits lorsque ledit véhicule roule sur une voie rapide et les quadrants inférieurs desdites données d'image (21) étant déduits lorsque ledit véhicule roule dans un milieu urbain ;
- un moyen de détection d'objets (3), qui détecte des objets dans ladite au moins une région (22) ;
- un moyen de détermination de criticité pour la sécurité (4), qui détermine des objets critiques pour la sécurité du véhicule à partir desdits objets détectés ;
- un moyen de détermination visuelle (103) pour déterminer l'emplacement dans les données d'image (21) du foyer visuel d'un conducteur du véhicule ;
- un moyen d'estimation d'attention du conducteur (5), qui estime l'attention d'un conducteur du véhicule en fonction desdits objets déterminés critiques pour la sécurité ; et
- un moyen d'alerte du conducteur (104), qui alerte le conducteur du véhicule en fonction de ladite attention estimée du conducteur.
